# EUROPEAN PATENT APPLICATION

(11) **EP 3 584 533 A1**
(43) Date of publication of application: **25.12.2019**
(21) Application number: 18178460.4
(22) Date of filing: 19.06.2018
(51) Int. Cl.: G01C 15/00, G01C 25/00, G01B 11/00

(54) **COORDINATE MEASUREMENT SYSTEM**

(71) Applicant: Apodius GmbH, 52068 Aachen (DE)
(72) Inventor: ROBERZ, Jonathan, D-52064 Aachen (DE)
(74) Representative: Kaminski Harmann

(57) **Abstract**

The invention relates to a coordinate measurement system comprising a camera comprising a sensor and a telecentric lens, the camera being configured for generating an image, a pose indicator comprising a retro-reflector and an orientation indicator, the retro-reflector and the orientation indicator having a defined spatial arrangement relative to the camera, and a laser tracker having an electronic distance meter (EDM), a direction measuring unit, and an orientation acquisitor, the laser tracker defining a reference system and being configured for determining a pose of the camera in the reference system by determining a position of the retro-reflector with the EDM and determining an orientation of the orientation indicator with the orientation acquisitor, and a computer connected to the laser tracker and to the camera, the computer being configured for determining a position of at least an element of a generated image in the reference system based on a determined pose of the camera and the generated image, and outputting the position of at least the element of the generated image as a measurement result.

## Description

The present invention relates to a coordinate measurement system.

In the aerospace industry, particular attention is paid to precision as part of safety control. A special measurement task is that of measuring the position, the orientation, and/or the shape of measuring object features, such features e.g. being markings or cut formations (drill holes, sags, or grooves). As is typical in the art, such parts are made from Carbon Composite, Aluminium or Titanium.

The invention provides a coordinate measurement system for high-precision measurements. The invention also provides calibration methods for such a coordinate measurement system.

The invention relates to a coordinate measurement system comprising a camera comprising a sensor and a telecentric lens, the camera being configured for generating an image, a pose indicator comprising a retro-reflector and an orientation indicator, the retro-reflector and the orientation indicator having a defined spatial arrangement relative to the camera, and a laser tracker having an electronic distance meter (EDM), a direction measuring unit, and an orientation acquisitor, the laser tracker defining a reference system and being configured for determining a pose of the camera in the reference system by determining a position of the retro-reflector with the EDM and determining an orientation of the orientation indicator with the orientation acquisitor, and a computer connected to the laser tracker and to the camera, the computer being configured for determining a position of at least an element of a generated image in the reference system based on a determined pose of the camera and the generated image, and outputting the position of at least the element of the generated image as a measurement result.

Determining the position of at least the element of the generated image may be based on a transformation of image coordinates into the reference system, wherein the computer is configured for determining the image coordinates.

The image coordinates may represent at least one of (a) one or more points in the image, (b) part of the image, (c) the whole image, and (d) a form in the image.

The computer may be configured for detecting at least one of a point and a form in the generated image based on image processing or based on a selection received by a user interface connected to the computer.

The form in the image may be a contour of a geometric shape on a measuring object.

The point in the image may be a feature of a geometric shape on a measuring object.

The computer may be configured for determining a distance between two points and outputting the distance as a measurement result.

The coordinate measurement system may further comprise a light source for shortening an exposure time of the camera by emitting a light.

The computer may be configured for controlling the light source based on at least one of the determined pose of the camera and the determined position of at least the element of the generated image.

The camera and the pose indicator may be mounted on a supporting device, which is comprised by the coordinate measurement system, or on a hand-held carrier, which is comprised by the coordinate measurement system.

Said supporting device may be configured for moving the camera and the pose indicator, and wherein the computer is configured for controlling a movement of the supporting device.

The computer is comprised by at least one of the laser tracker, the camera, and an external server.

The invention further relates to a method of calibrating a coordinate measurement system according to any of the preceding claims, wherein the method comprises
- moving the camera and the pose indicator such that the camera captures at least part of a calibration pattern, wherein the calibration pattern is comprised by a calibrator,
- with the laser tracker, determining a first pose of the camera in the reference system,
- with the camera, capturing a first image of at least part of the calibration pattern,
- with the laser tracker, determining a second pose of the camera in the reference system, the second pose being different from the first pose,
- with the camera, capturing a second image of at least part of the calibration pattern,
- with the laser tracker, determining a third pose of the camera in the reference system, the third pose being different from the first pose and the second pose,
- with the camera, capturing a third image of at least part of the calibration pattern,
- with the computer, based on at least one of position transformation, position resection, and triangulation, determining at least one of
- an orientation of the camera relative to the calibration pattern, and
- a vertical distance between a position of the camera and at least part of the calibration pattern.

The invention further relates to a method of calibrating a coordinate measurement system according the description herein, wherein the method comprises
- moving the camera and the pose indicator such that the camera captures at least part of a known calibration pattern, wherein the calibration pattern is comprised by a calibrator and has a known pose relative to the calibrator,
- with the laser tracker, determining a pose of the camera in the reference system,
- with the camera, generating an image of at least part of the calibration pattern,
- with the computer, determining first coordinates of at least part of the calibration pattern in the reference system,
- with the laser tracker, determining a pose of the calibrator in the reference system,
- with the computer, generating second coordinates of at least part of the calibration pattern in the reference system,
- with the computer, matching the first coordinates with the second coordinates,
- updating the known pose of the camera relative to the retro-reflector and the orientation indicator based on a deviation between the first coordinates and the second coordinates.

Determining the pose of the calibrator may be based on:
- determining a position of each of a group of at least three calibration retro-reflectors, wherein each of the group of calibration retro-reflectors are mounted on the calibrator in a known position relative to the calibration pattern; or determining the pose of the calibrator may be based on:
- determining a first position of a calibration retro-reflectors when mounted on the calibrator in a first known position relative to the calibration pattern,
- determining a second position of the calibration retro-reflectors when mounted on the calibrator in a second known position relative to the calibration pattern, and
- determining a third position of the calibration retro-reflectors when mounted on the calibrator in a third known position relative to the calibration pattern; or
determining the pose of the calibrator may be based on:
- determining a position of a calibration retro-reflector, wherein the retro-reflector is mounted on the calibrator in a known position relative to the calibration pattern, and
- determining an orientation of a calibration orientation indicator with the orientation acquisitor, wherein the calibration orientation indicator is mounted on the calibrator in a known pose relative to the calibration pattern; or determining the pose of the calibrator may be based on:
- determining a position of a calibration retro-reflector, wherein the retro-reflector is mounted on the calibrator in a known position relative to the calibration pattern, and
- determining an orientation of the calibration pattern with the orientation acquisitor.

In the following, the invention will be described in detail by referring to exemplary embodiments that are accompanied by figures, in which:
- Fig. 1:: shows a system according to the invention while measuring a part with drill holes;
- Fig. 2:: shows a system according to the invention while performing a calibration procedure;

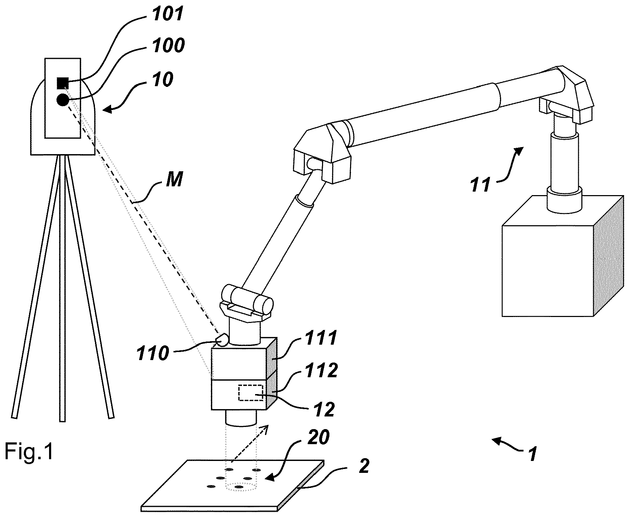

Figure 1 shows one exemplary embodiment 1 of a coordinate measuring system. The shown system 1 comprises a laser tracker 10, a supporting device 11 embodied as an articulated robot, and a computer 12. In the shown example, the system 1 is measuring drill holes 20 which were machined in a plate 2. The computer 12 in this embodiment is comprised by the camera 112. In other embodiments, the computer 12 may be comprised by the laser tracker 10, an external server (not shown), the support device 11, a hand-held carrier (not shown), or a combination of the mentioned items. Said combination can e.g. be realised by the computer 12 having at least two units which are interconnected wirelessly or by wire. The camera 112 has a sensor and a telecentric lens.

The robot 11 has multiple arms with rotary joints between them. At least one of the arms is powered to rotate and/or to be moved translationally. The computer can be configured for controlling the powered arms. In either instance, the computer is connected to the laser tracker 10 and the camera 112, optionally also to the robot 11.

As is indicated with the dashed arrow, the articulated robot 11 is in this example controlled to guide the camera 112 mounted at a distal end of the robot 11 over the plate 2. The laser tracker 10 has an electronic distance meter (EDM) 100 which can be pivoted both vertically and horizontally, wherein the vertical and horizontal angles are determined by a direction measuring unit of the laser tracker. The EDM can e.g. be an interferometer or an absolute distance meter (ADM).

The direction measuring unit may comprise an angle encoder for each of the pivot axes. In case the measuring beam M emitted by the EDM is pointed to a retro-reflector 110, the position of the retro-reflector 110 can be measured with the laser tracker 10 in that the distance to the retro-reflector 110 is determined with the EDM and the horizontal and vertical angles of the alignment of the measuring beam M are determined with the direction measuring unit. Said measured distance and the two angles give a position in a spherical coordinate system. The retro-reflector 110 reflects the measuring beam M exactly back to where it came from (i.e. towards the EDM 100).

The retro-reflector 110 and an orientation indicator 111 form together a pose indicator. The retro-reflector 110 and the orientation indicator 111 have, relative to the camera 112, a spatial arrangement that is at least one of: known, defined, and fixed. In particular, the pose indicator has a known and fixed spatial arrangement relative to the camera 112. The pose indicator is in this example mounted at a distal end of the articulated robot 11.

The robot 11 is an optional equipment (supporting device). The pose indicator and the camera 112 could - instead of on a supporting device - as well be mounted (in a known relative pose to each other) on a hand-held carrier, wherein the movement indicated with the dashed arrow in figure 1 could also be performed manually by a user who guides the hand-held carrier with his hands. The optional supporting device is not necessarily movable by external (e.g. electrical) power but it can also just provide support with a structure, in that way allowing the camera 112 and the pose indicator to be manually guidable with certain restraints. Accordingly, alternatives for the robot 11 as a supporting device may be an articulated arm (without motorised joints/arms), a portal, a SCARA-structure, or any other such mechanical structure. Further alternative motorised supporting devices are a SCARA-robot, a UAV (Unmanned Aerial Vehicle), an AGV (Autonomous Guided Vehicle), a driven portal, a tool machine, or any other CNC machine.

The laser tracker 10 further has an orientation acquisitor 101, which is configured to detect the current orientation of an orientation indicator 111. A pose describes both a position and an orientation, in other words a spatial condition with regard to six degrees of freedom (6-DOF). Based on the position of the retro-reflector 110 determined by the EDM 100 and the direction measuring unit and further based on the orientation of the orientation indicator 111 determined by the orientation acquisitor 101, the pose of the camera 112 can be derived.

A main goal of the (mediately by means of the pose indicator) tracked camera 112 is the determination of positions (or respectively: coordinates) of points and/or forms on the plate 2 in a reference system defined by the laser tracker.

However, based on the measured pose of the camera, also feedback for controlling the robot 11 could be generated by the computer. The pose of the camera measured in this way is a lot more precise compared to the determination by means of e.g. angle encoders in the rotary joints of the arm.

The camera 112 has a sensor (e.g. CCD or CMOS) and a telecentric lens. The telecentric lens utilised in the camera 112 has its entrance pupil at infinity and thus provides an orthographic projection. Objects captured by the camera 112 have the same magnification independent from the distance between the camera 112 and the object. The front lens is as large as the depicted object part. This parallel field of view is indicated in figure 1 by the vertical dashed projection lines leading from the camera 112 to the plate 2. Optionally, the camera 112 can be aligned (e.g. controlled by the robot) such that the optical axis has substantially an angle of 0° with the z-axis, i.e. it is vertical if the object surface is horizontal. However, a potential tilt with respect to the z-axis will be detected by the laser tracker and taken into account when determining a position or pose of at least an element of the generated image in the reference system.

The orientation acquisitor 101 could for example be embodied as a pattern detection camera. The orientation indicator 111 may comprise an arrangement of at least three lamps, which are in a fixed known spatial relation. Based on the perception of the lamp pattern, the orientation of the orientation indicator 111 can be derived. The orientation indicator 111 could also be a pattern code (e.g. QR) or merely a specific body of which the 3D appearance is known.

From the images captured with the camera 112, e.g. the diameter and the centre position of the drill holes can be measured in the reference system. In this manner, elements of a generated image like single points (point coordinates), 2D or 3D forms (such as circles, rectangles, cuboids, etc.), or image pieces, but also the whole image could be transformed into the reference system. For this transformation, the element(s) is/are expressed in image coordinates. The image coordinates are 2D coordinates derived from the image, and they may be based in a camera coordinate system inherent to the camera (e.g. the camera coordinate system is spanned by the sensor of the camera). Not only pixels can have coordinates but also elements that are allocated in-between at least two pixels (sub-pixel coordinates).

Typical part tolerances in the field of aerospace are around 0.07 mm with respect to a drill hole diameter of 20 mm or less, and around 0.5 mm with respect to positions of features (e.g. drill hole centres, positions of edges). A system according to the invention achieves this measurement goal with a measurement uncertainty of 25 µm over a volume of 10 m. In the particular case where a mechanical manipulator is used for moving the camera and the pose indicator, said manipulator can move with a speed of up to 100 mm/s without compromising the measurement results.

A user could also manually (with a user interface of the computer) determine or select a point or form in an image, and then measure its coordinates as described herein. The point may be a feature of a geometric shape on the measuring object and the form may be a contour of a geometric shape on the measuring object. The geometric shape may be one-, two- or three-dimensional, so e.g. a single point (1D), a plane or circle (2D), or a material recess or elevation (3D). By way of example, the form in the image may be the contour of a formation created with a mill or drill. In another example, the point in the image may be the centre point of a drill hole, a point on the edge of a groove or drill hole. As exemplary measurement results, the measurement system can determine (a) positions of points or forms, (b) a distance between two points or forms, (c) a distance within a form, or (d) an alignment (orientation) or at least two points, in particular of a form or object.

Particularly, the system can be equipped with a light source in order to shorten the exposure time of the camera 112 by emitting a light. For example, the light source could be mounted on an arm of the articulated robot 11 or on the camera 112. Alternatively, the light source could be arranged externally next to the work piece 2.

In a special embodiment of the system 1, the robot 11 can - according to an automatic-measurement functionality executed by the computer - move over the plate 2 in order to measure at least two drill holes along its trajectory which cannot be captured with just one single image (i.e. the distance between those two drill holes furthest from each other is larger than the field of view of the camera 112). Preferably, the computer triggers the light source whenever a certain feature (e.g. the drill hole) is detected in an image generated by the sensor of the camera 112 in order to prevent the image captured of the drill hole being blurred due to the movement of the robot 11. Every time the light source is triggered, or every time a drill hole is detected, the computer stores an image captured in that moment with the camera. Every stored image can be spatially linked to each other because the pose of the camera at each time of capture is known from the pose data generated by the laser tracker. Therefore, the distance between drill holes can not only be measured within one single captured image, but also across two or more captured images.

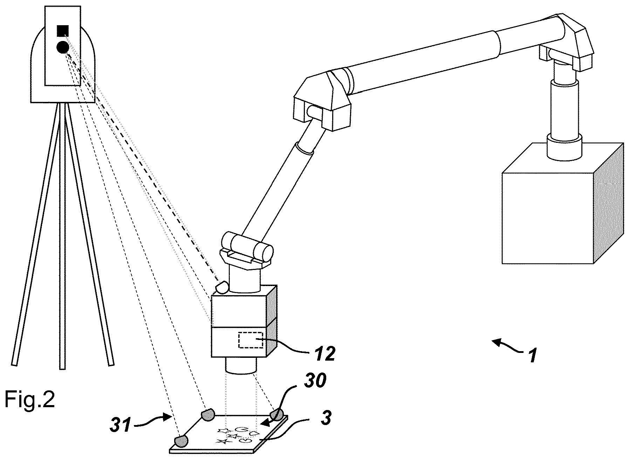

An embodiment of a calibration method for a coordinate measurement system as described herein is explained based on figure 2. The robot 11 moves the camera 112 to a position over a calibrator 3 comprising a calibration pattern 30 and remains in that position. Then, the pose of the camera 112 and the pose of the calibrator 3 are precisely determined with the laser tracker 10. The camera 112 can be aligned such that the optical axis of the camera 112 is parallel to the z-axis. The robot is optional for this calibration method - the camera and the pose indicator can also be mounted on a hand-held carrier, and thus may be moved manually.

The pose of the camera 112 can be determined as described above, i.e. by means of the reflector 110 (position) and the orientation indicator 111 (orientation). The pose of the calibrator 3 may be determined in the same way, or - as shown in figure 2 - by means of a group 31 of at least three calibration retro-reflectors, which one by another can be targeted and precisely measured. Due to known appearance and arrangement of the pattern 30 relative to the group 31 of reflectors, the pose of the pattern 30 can be derived from the determined pose of the calibrator 3. Alternatively, only one calibration retro-reflector may be used which is sequentially positioned in three predetermined position within the calibrator.

The pose of the calibrator, or of the calibration pattern respectively may be determined in various other ways. For example, the pattern itself may act as a calibration orientation indicator for being analysed by the orientation acquisitor of the laser tracker. Alternatively, the calibrator may have a separate calibration orientation indicator other than the calibration pattern (such as a set of LED for being analysed by the orientation acquisitor of the laser tracker)

The image that the camera 112 captures in this pose is analysed by the computer in that the captured pattern 30 is measured with regard to position and alignment. Now the coordinates of the pattern 30 concluded on the basis of the determined pose of the camera 112 can be matched with the coordinates of the pattern 30 concluded on the basis of the determined pose of the calibrator 3.

As mentioned above, due to the nature of telecentric lenses, the z-axis distance between the camera 112 and the current object (2 or 3) captured by the camera 112 cannot be derived from a only a single captured image itself, but only x- and y-coordinates. Therefore, the z-axis information can be determined based on the z-position difference between the reflector 110 and at least one of the reflectors of the group 31. The x- and y-axis information is derived from the image of the pattern 30 itself because - given that the optical axis is aligned parallel to the z-axis - the sensor of the camera 112 has a predetermined x-/y-deviation relative to the reflector 110, whose position is precisely determined with the laser tracker 10.

In this embodiment of a calibration method, the determination of the pose of the camera with the laser tracker can take place at the same time of the capturing of the image of the at least part of the calibration pattern. Alternatively, these two steps can take place time-displaced but the pose of the camera may not change in that time displacement. Therefore, this time-displaced proceeding is more suitable when operating with a supporting device, like the shown robot. Whether the two aforementioned steps take place before or after the determination of the pose of the calibration pattern is not relevant.

Generally, not only pixel information can be assigned certain coordinates, but also sub-pixel elements. For example, if a circle (e.g. from a drill hole) is detected and the centre of the circle is determined but not unambiguously associated to a single pixel, but asymmetrically proportioned to several pixels, a sub-pixel accuracy can be achieved. For example, the circle can be determined with the computer by detecting such shape by image processing and preferably fitting a "perfect" circle into the detected circular shape in the image. In this way, many different geometrical forms can be fitted. In case, a sag is examined, two concentric circles are detected.

The camera 112 can also be calibrated intrinsically by merely taking one image of the calibration pattern 30 as shown in figure 2. With this, errors of the camera 112 itself (e.g. distortion, etc.) can be corrected.

A further embodiment of a calibration of the z-axis comprises capturing three different images from three different poses. By means of position transformation, triangulation, or image resection, respectively, the z-distance from the tracked camera to the object can be derived. In this case, a calibration set-up would not need three reflectors as shown in figure 2, and neither would it require a calibration orientation indicator. Also, the calibration pattern in this exemplary calibration method must not necessarily be known and therefore could be any structure from the environment.

Once the z-axis information is determined by a calibration method as described herein, the full 3D coordinates of the measuring object 2 can be determined and output as measurement result. The mentioned calibration methods are independent of the mounting of the camera 112 (hand-held carrier, supporting device).

Although the invention is illustrated above, partly with reference to some preferred embodiments, it must be understood that numerous modifications and combinations of different features of the embodiments can be made. All of these modifications lie within the scope of the appended claims.

## Claims

1. A coordinate measurement system comprising
- a camera comprising a sensor and a telecentric lens, the camera being configured for generating an image,
- a pose indicator comprising a retro-reflector and an orientation indicator, the retro-reflector and the orientation indicator having a defined spatial arrangement relative to the camera, and
- a laser tracker having an electronic distance meter (EDM), a direction measuring unit, and an orientation acquisitor, the laser tracker defining a reference system and being configured for determining a pose of the camera in the reference system by
- determining a position of the retro-reflector with the EDM and
- determining an orientation of the orientation indicator with the orientation acquisitor, and
- a computer connected to the laser tracker and to the camera, the computer being configured for
- determining a position of at least an element of a generated image in the reference system based on
- a determined pose of the camera and
- the generated image, and
- outputting the position of at least the element of the generated image as a measurement result.

2. The coordinate measurement system according to claim 1,
wherein determining the position of at least the element of the generated image is based on a transformation of image coordinates into the reference system, wherein the computer is configured for determining the image coordinates.

3. The coordinate measurement system according to any of the preceding claims,
wherein the image coordinates represent at least one of
- one or more points in the image,
- part of the image,
- the whole image, and
- a form in the image.

4. The coordinate measurement system according to claim 3,
wherein the computer is configured for
- detecting at least one of a point and a form in the generated image based on image processing or based on a selection received by a user interface connected to the computer.

5. The coordinate measurement system according to any of the claims 3 and 4, wherein the form in the image is a contour of a geometric shape on a measuring object.

6. The coordinate measurement system according to any of the claims 3 to 5, wherein the point in the image is a feature of a geometric shape on a measuring object.

7. The coordinate measurement system according to any of the preceding claims,
wherein the computer is configured for
- determining a distance between two points and
- outputting the distance as a measurement result.

8. The coordinate measurement system according to any of the preceding claims, comprising
- a light source for shortening an exposure time of the camera by emitting a light.

9. The coordinate measurement system according to claim 8,
wherein the computer is configured for
- controlling the light source based on at least one of
- the determined pose of the camera and
- the determined position of at least the element of the generated image.

10. The coordinate measurement system according to any of the preceding claims,
wherein the camera and the pose indicator are mounted on
- a supporting device, which is comprised by the coordinate measurement system, or
- a hand-held carrier, which is comprised by the coordinate measurement system.

11. The coordinate measurement system according to 10 and comprising the supporting device,
wherein the supporting device is configured for
- moving the camera and the pose indicator, and
wherein the computer is configured for
- controlling a movement of the supporting device.

12. The coordinate measurement system according to any of the preceding claims,
wherein the computer is comprised by at least one of the laser tracker, the camera, and an external server.

13. A method of calibrating a coordinate measurement system according to any of the preceding claims, wherein the method comprises
- moving the camera and the pose indicator such that the camera captures at least part of a calibration pattern, wherein the calibration pattern is comprised by a calibrator,
- with the laser tracker, determining a first pose of the camera in the reference system,
- with the camera, capturing a first image of at least part of the calibration pattern,
- with the laser tracker, determining a second pose of the camera in the reference system, the second pose being different from the first pose,
- with the camera, capturing a second image of at least part of the calibration pattern,
- with the laser tracker, determining a third pose of the camera in the reference system, the third pose being different from the first pose and the second pose,
- with the camera, capturing a third image of at least part of the calibration pattern,
- with the computer, based on at least one of position transformation, position resection, and triangulation, determining at least one of
- an orientation of the camera relative to the calibration pattern, and
- a vertical distance between a position of the camera and at least part of the calibration pattern.

14. A method of calibrating a coordinate measurement system according any of claims 1 to 12, wherein the method comprises
- moving the camera and the pose indicator such that the camera captures at least part of a known calibration pattern, wherein the calibration pattern is comprised by a calibrator and has a known pose relative to the calibrator,
- with the laser tracker, determining a pose of the camera in the reference system,
- with the camera, generating an image of at least part of the calibration pattern,
- with the computer, determining first coordinates of at least part of the calibration pattern in the reference system,
- with the laser tracker, determining a pose of the calibrator in the reference system,
- with the computer, generating second coordinates of at least part of the calibration pattern in the reference system,
- with the computer, matching the first coordinates with the second coordinates,
- updating the known pose of the camera relative to the retro-reflector and the orientation indicator based on a deviation between the first coordinates and the second coordinates.

15. The method according to claim 14, wherein
determining the pose of the calibrator is based on:
- determining a position of each of a group of at least three calibration retro-reflectors, wherein each of the group of calibration retro-reflectors are mounted on the calibrator in a known position relative to the calibration pattern; or
determining the pose of the calibrator is based on:
- determining a first position of a calibration retro-reflectors when mounted on the calibrator in a first known position relative to the calibration pattern,
- determining a second position of the calibration retro-reflectors when mounted on the calibrator in a second known position relative to the calibration pattern, and
- determining a third position of the calibration retro-reflectors when mounted on the calibrator in a third known position relative to the calibration pattern; or
determining the pose of the calibrator is based on:
- determining a position of a calibration retro-reflector, wherein the retro-reflector is mounted on the calibrator in a known position relative to the calibration pattern, and
- determining an orientation of a calibration orientation indicator with the orientation acquisitor, wherein the calibration orientation indicator is mounted on the calibrator in a known pose relative to the calibration pattern; or
determining the pose of the calibrator is based on:
- determining a position of a calibration retro-reflector, wherein the retro-reflector is mounted on the calibrator in a known position relative to the calibration pattern, and
- determining an orientation of the calibration pattern with the orientation acquisitor.
